# EUROPEAN PATENT SPECIFICATION

(11) **EP 2 180 630 B1**
(45) Date of publication and mention of the grant of the patent: **09.09.2015**
(21) Application number: 07845897.3
(22) Date of filing: 11.12.2007
(51) Int. Cl.: H04L 29/06, G06F 21/10

(54) **AN INTERFACE METHOD FOR VERIFYING A CONTENT SUMMARY**
SCHNITTSTELLENVERFAHREN ZUM VERIFIZIEREN EINER INHALTSZUSAMMENFASSUNG
PROCÉDÉ D'INTERFACE DE VÉRIFICATION DE RÉSUMÉ DE CONTENU

(30) Priority: 16.08.2007 CN 200710143662
(43) Date of publication of application: 28.04.2010
(73) Proprietor: ZTE Corporation, Shenzhen, Guangdong 518057 (CN)
(72) Inventor: KE, Zunyou, Shenzhen, Guangdong 518057 (CN)
(74) Representative: Ilgart, Jean-Christophe
(86) International application number: PCT/CN2007/003541
(87) International publication number: WO 2009/021370

(56) References cited:
- WO-A1-2006/019275
- WO-A1-2007/035062
- WO-A2-02/071191
- WO-A2-2006/118896
- US-A1- 2004 261 123
- US-A1- 2005 138 063
- US-A1- 2006 004 765

## Description

### Field of the Invention

The present invention relates to mobile multimedia broadcast multicast technology, more particularly to an interface method for verifying the content summary, used in a mobile multimedia broadcast multicast system for guaranteeing the consistency of the service content provided by the content provider.

### Background of the Invention

With the development of the mobile network communication technology, the transmission of various types of media content information becomes more and more convenient, and the various types of media content information becomes increasingly rich and colourful, for example, users can receive and enjoy various types of music, video, games, etc.

Various types of abundant contents rely to a certain extent, on content providers (CPs) who make and provide media contents. A part of the contents is even proprietary to the CPs and stored and provided as services by the CPs, which is already a feasible way for expanding the value-adding service market.

Therefore, the CPs provide content services to users relying on the platform offered by operators. That is to say, the CPs provide services to the users through the broadcast multicast service (BCMCS) of operators' broadcast multicast service center (BM-SC) or registering content service of the management platform. However, the content itself will not be uploaded to the system of the operator for management, but are provided as services to users directly by the CPs' content servers.

Currently, Digital Rights Management (DRM) may be applied to the above case, but the process is relatively complex. Since it relates to comparatively complex process and interface technologies, it leads to a relatively high requirement from the CPs' content servers. Furthermore, the DRM may require an authorization centre from the operator or a third party.

Therefore, it is imperative to have an interface method for verifying the content summary, for guaranteeing the consistency of the service contents provided by the CP in a mobile multimedia broadcast multicast system.

### Summary of the Invention

With respect to the problems in the art, the present invention provides an interface method for verifying the content summary, used in a mobile multimedia broadcast multicast system for guaranteeing the consistency of the service contents provided by the content provider.

The present invention provides an interface method for verifying the content summary, which includes the following steps: step 1, when a user requests a service content, a service management platform configures the calculation parameters of the content summary; step 2, the service management platform instructs the content server of the content provider to provide the content summary information according to the calculation parameters of the content summary; step 3, the content server of the content provider generates the content summary information according to the calculation parameters of the content summary, and returns the content summary information to the service management platform; and step 4, the service management platform obtains the content summary information, and determines whether to verify the consistency of the service content.

Wherein, the content summary calculation parameters are unified configured or correspond to the service content provided by the content provider.
the calculation parameters of content summary comprise at least one of: a content identifier, a segmentation list, a calculation sequence, and algorithm choices, wherein the content identifier indicates the content registered by the content provider, the content comprises the name of the service content provided by the content provider and the content ID; the segmentation list is a parameter list obtained by segmenting the content data, and comprises at least one of: a data unit length, options for multi-stage segmentation, options for constant-length segmentation, and a data segment length; the calculation sequence specifies the calculation of one execution content summary of the data segment; and the algorithm choices specify the algorithm type and parameters used to calculate the content summary.

In the method of the present invention, the premise for performing step 2 is that the content provider has submitted the registration of the service content.

Wherein, when the content provider submits the registration of the service content, the service management platform obtains the initial content summary information of the service content.

Alternatively, the premise for performing step 2 is that the service management platform needs to perform the service content consistency verification.

Wherein, when the service management platform needs to perform the service content consistency verification, it acquires the initial content summary information of the service content; and determines to perform the service content consistency verification in step 4.

In step 3, performing the following processings: the content server of the content provider parsing one or more calculation parameters of the content summary; according to the calculation parameters of the content summary, the content server of the content provider performs the content summary calculation of the service content and obtains the content summary information; and the content server of the content provider returns the content summary information to the service management platform.

When the content provider submits the registration of the service content, step 4 performs the following processings: the service management platform specifies the calculation parameters of the content summary; and makes the calculation parameters of the content summary corresponding to the initial content summary information.

Alternatively, when the service management platform needs to perform the processing of service content consistency verification, in step 4 determining to perform the processing of the service content consistency verification, the processing of the service content consistency verification is: the service management platform compares the content summary information obtained from the calculation parameters of the content summary with the initial content summary information, so as to determine the consistency of the service content.

Therefore, the method of the present invention can guarantee the consistency of the service contents provided by the CP in a mobile multimedia broadcast multicast system.

Other features and advantages of the present invention will be described in the following description, and be obvious partly from the description or be understood by implementing the present invention. The objects and other advantages of the present invention can be realized and obtained through the structures indicated by the specification, claims and drawings.

### Brief Description of the Drawings

The drawings provide a further understanding of the present invention and constitute a part of the specification, which are used to explain the present invention with the embodiments of the present invention rather than to limit the present invention, wherein,
Fig.1 is a flow chart of the interface method for verifying the content summary according to the present invention;
Fig.2 is a schematic view of the networked devices involved by an embodiment of the present invention;
Fig.3 is a schematic view of the steps of the interface method for the content summary verification according to an embodiment of the present invention; and
Fig.4 is a process sequence view of employing the present invention to provide service.

### Detailed Description

The preferred embodiments will be described in connection with drawings. It will be appreciated that the preferred embodiments described herein are provided only for illustrating and explaining the present invention not for limiting the present invention.

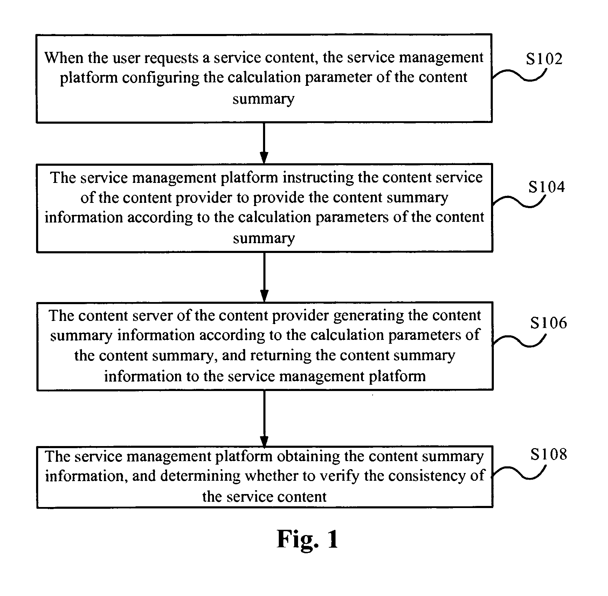

Fig.1 is a flow chart of the interface method for verifying the content summary according to the present invention. As shown in Fig.1, the method comprises the following steps:
Step S102, when a user requests a service content, the service management platform configures the calculation parameters of the content summary;
Step S104, the service management platform instructs the content server of the content provider to provide the content summary information according to the calculation parameters of the content summary;
Step S106, the content server of the content provider generates the content summary information according to the calculation parameters of the content summary, and returns the content summary information to the service management platform; and
Step S108, the service management platform obtains the content summary information, and determines whether to verify the consistency of the service content.

Wherein, the content summary calculation parameters are unified configured, or correspond to the service content provided by the content provider.

The content summary calculation parameters comprise at least one of: a content identifier, a segmentation listing, a calculation sequence, and algorithm choices, wherein, the content identifier indicates the content that the provider has registered, which comprises the name of the service content provided by the content provider and the content ID; the segmentation listing is a parameter listing obtained by segmenting content data and comprises at least one of: data unit length, options for multi-stage segmentation, options for constant-length segmentation, and data segment length; the calculation sequence specifies the calculation of one execution content summary of the data segment; and the algorithm choices specify the algorithm type and parameters used to calculate the content summary.

In the method of the present invention, the premise for performing step 102 is that the content provider has submitted the registration of the service content.

Wherein, when the content provider submits the registration of the service content, the service management platform obtains the initial content summary information of the service content.

Alternatively, the premise for performing step S104 is that the service management platform needs to perform service content consistency verification.

Wherein, when the service management platform needs to perform service content consistency verification, it acquires the initial content summary information of the service content; and determines to perform the content consistency verification in step 4.

In step S106, the following processings are performed: the content server of the content provider parses one or more calculation parameters of the content summary; according to the calculation parameters of the content summary, the content server of the content provider performs the content summary calculation of the service content and obtains the content summary information; and the content server of the content provider returns the content summary information to the service management platform.

When the content provider submits the registration of the service content, step 108 performs the following processings: the service management platform specifies the calculation parameters of the content summary; and makes the calculation parameters of the content summary corresponding to the initial content summary information.

Alternatively, when the service management platform needs to perform service content consistency verification, that what will be done in step S108 is to determine to perform the processings of the service content consistency verification, the processings of the service management platform compares the content summary information obtained from the calculation parameters of the content summary with the initial content summary information, so as to determine consistency of the service content.

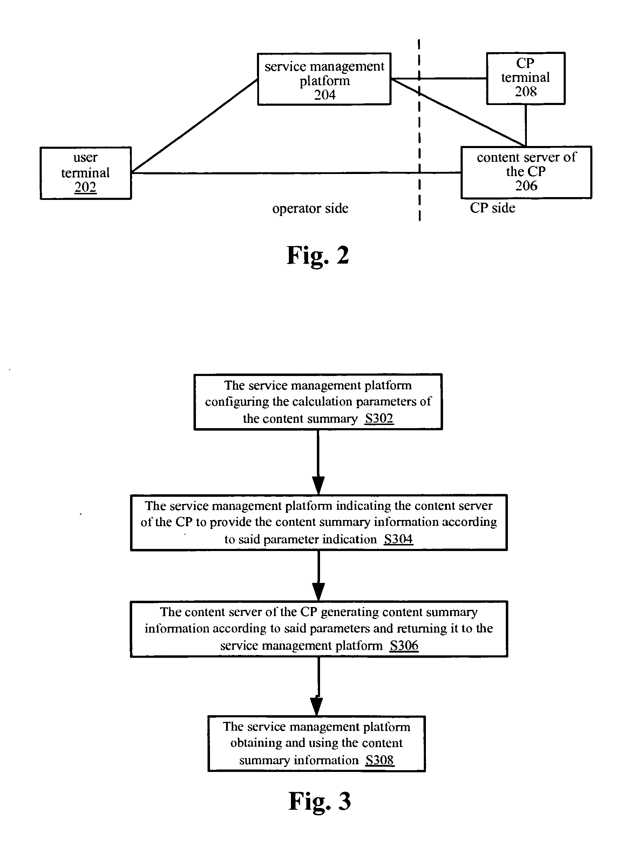

Fig.2 is a schematic view of the networked devices involved by an embodiment of the present invention. As shown in Fig.2, devices mainly involved in the embodiment are:
User terminal 202, used to obtain a service guide from the service management platform and to choose the service content to be used, send authentication request to the service management platform, parse content service parameters, and obtain content data from a CP content server and show it;
Service management platform 204, used to provide the content service function registered by the CPs, request to verify content consistency and verify the content summary, and authenticate the user terminal;
CP content server 206, used to provide the content service function to the user terminal, generate the content summary and provide it to the service management platform; and
CP terminal 208, used to enable the CP to register content service at the service management platform and manage the CP content server.

Fig.3 is a schematic view of the steps of the interface method for the content summary verification according to an embodiment of the present invention. The method according to the present invention will be described in connection with Fig.2. As shown in Fig.3, comprises the following steps:
S302, the service management platform 204 configures the calculation parameters of the content summary, wherein, the operator configures the calculation parameters of the content summary according to management requirement, these parameters are the major parameters of the content consistency protection interface; the parameter configuration method comprises globally unified configuring the parameters or making them one-to-one corresponding to the content service. The latter allows the parameters of each content service being different.
S304, the service management platform directs the CP content server to provide the content summary information according to the parameter indication, wherein, the indication sent to the CP content server by the service management platform contains the parameters or its list, the premise of the instruction initiated by the service management platform comprises that the service management platform needs to acquire the initial summary information of the content at the time of the CP submitting content service registration, when the CP submits the content service registration, the service management platform needs to obtain the initial summary information of this content, while the verification on the service management platform is a demand on the content consistency of the service management platform verification.
S306, the CP content server generates the content summary information according to the content summary information generated by the parameters and returns it to service management platform, wherein, the CP content server performs the summary calculation of the content file and returns the summary information according to the parameters, afterward the CP content server can parse one or more calculation parameters from the indication of the service management platform; and
S308, the service management platform obtains and utilizes the content summary information, wherein, if the premise is the CP submitting the content service registration, then the service management platform needs to obtain the initial summary information of the content, and the service management platform specifies the parameters for the summary calculation, corresponding to the content summary information; and if the premise is the service management platform needing to verify content consistency, then the service management platform obtains the latest content summary information from the CP content server, and compares it with the stored content summary information.

In step S302, the parameters comprise one or more of the following parameters: a content identifier, a segmentation listing, a calculation sequence, and algorithm choices. Wherein the meanings of the parameters are as follows:
The content identifier uniquely indicates the content that the CP has registered, such as content name or content ID;
The segmentation list is the parameter list obtained by segmenting content data and comprises one or more of: a data unit length, options for multi-stage segmentation, options for constant-length segmentation, and a data segment length;
The calculation sequence specifies which data segment to be applied with the calculation; and
The algorithm choices specify the algorithm type and parameters to be used. The available summary algorithms comprise MD5 or SHA-1, etc.

One example of parameter organization is shown in Table 1, which may be conveniently described using XML.

**Table 1 Parameter organization example**

| parameters | | Example data | example |
|---|---|---|---|
| Content ID | | 12345678 | Or content name |
| Segmentation listing | Data unit length | 1 | Unit: byte |
| | Options for multi-stage segmentation | 1 | N: segmenting n stages |
| | Options for segment length | 1 | 0: length varying, |
| | | | 1: constant length |
| | Data segmentation length | 65536 | |
| Calculation sequence | | {1,11,21,......} | |
| Options for algorithm | Algorithm type | MD5 | |
| | Algorithm parameters | 16 | 16-bit summary value for each segment |

| | | | |
|---|---|---|---|
| When the content is identified with content name, the content name is unique. | | | |

In step S306, the calculation comprises: obtaining the calculation parameters; partitioning the content data into data segments; calculating the summary values of various segments; aggregating the summary values of various segments.

Aggregating the summary values of various segments can be realized simply by concatenating respective summary values corresponding to various segments in accordance with the order of the content data segments, and the resulting summary value is returned.

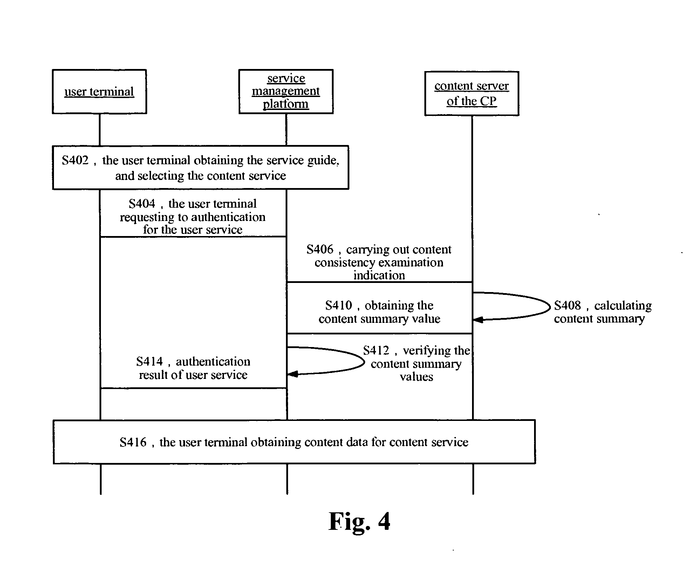

Fig.4 is a process sequence view of employing the present invention to provide service. As shown in Fig.4, the following steps are involved when the service system provides service:
S402, the user terminal obtains the service guide, wherein, the user terminal obtains, via an HTTP interactive manner, i.e., the user terminal via HTTP GET request and response with the service management platform, the service guide information from HTTP GET Response, wherein, this can be realized in another manner, i.e. broadcast manner, the user terminal obtains the service guide information from the broadcast channel of a known service management platform without a step of initiating a request by the user terminal, when the user selects a service content. After the service guide is demonstrated by the user terminal, the user can select the content service provided by the service guide at his terminal;
S404, the user terminal initiates an authentication request for the user service, wherein the message can comprise a user identifier (MSISDN or MDN), a content identifier, etc.;
S406, the service management platform initiates indication for content consistency examination, wherein, the service management platform specifies the summary calculation parameters and initiates indication for content consistency examination;
S408, CP content server calculates content summary, wherein, the parameters for the calculation are shown in Table 1, said calculation comprises the following steps: obtaining the calculation parameters; partitioning the content data into data segments; calculation various segment summary values; aggregating the summary values of various segments, and the content data segments being partitioned in one-stage manner or multi-stage manner according to the parameters after CP content server having parsed the calculation parameters; and employing a suitable algorithm and algorithm parameters to calculate the summary of the data segments according to the "calculation sequence" parameters for the segments whose summary values to be calculated, and aggregating the summary values of various segments which can be realized simply by concatenating respective summary values corresponding to various segments in accordance with the order of the content data segments, and the resulting summary value being returned;
S410, the service management platform obtains the content summary value, wherein, CP content server performs the summary operation of content files and returns the summary information;
S412, the service management platform verifies the content summary values, wherein, the service management platform compares the saved content summary information with the obtained content summary values for verification;
S414, the service management platform returns the user service authentication result, wherein, if the content consistency verification fails, then the authentication fails, or else other authentication for service management will be taken into account, for example whether it is necessary to determine order relationship, whether the order relationship is satisfied, whether it is necessary to check the user's account balance and whether the user's account balance is enough, and the like ; for the case in which the content consistency verification fails, the system will prompt the user the service being denied as well as inform the CP in a certain way in time; and
S416, the user terminal obtains content data for content service, and parses content service parameters including the IP and port of content service, and media encoding parameters, etc., wherein, the way for transmitting content which transmitted by the CP content server comprising video-on-demand or broadcast multicast, etc..

All in all, with the above mentioned interface method of the present invention, the consistency between the content registered by the CP and the service content can be guaranteed to a certain extent.

Above description is only to illustrate the preferred embodiments but not to limit the present invention. Various alterations and changes to the present invention are apparent to those skilled in the art. These alterations and changes are encompassed by the scope of the appended claims.

## Claims

1. An interface method for verifying a content summary, used in a mobile multimedia broadcast multicast system for guaranteeing the consistency of the service contents provided by a content provider with the service contents registered by the content provider at a service management platform; **characterized in that** the method comprises the following steps:
step 1, configuring, by the service management platform, the calculation parameters of the content summary, when a user requests a service content;
step 2, instructing, by said service management platform, a content server of the content provider to provide the content summary information according to said calculation parameters of the content summary;
step 3, said content server of the content provider generating said content summary information according to said calculation parameters of the content summary, and returning said content summary information to said service management platform; and
step 4, said service management platform obtaining said content summary information, and determining whether to verify the consistency of the service content;
wherein the premise for performing said step 2 is that said service management platform needs to perform said service content consistency verification;
wherein when said service management platform needs to perform said service content consistency verification, said service management platform acquiring the initial content summary information of said service content and determining to perform said service content consistency verification in said step 4;
wherein in step 4, determining to perform the processing of said service content consistency verification, the processing of said service content consistency verification is: said service management platform comparing said content summary information obtained from said calculation parameters of the content summary with the initial content summary information, so as to determine the consistency of said service content.

2. The method according to Claim 1, **characterized in that** said calculation parameters of the content summary are unified configured, or correspond to the service content provided by said content provider.

3. The method according to Claim 1, **characterized in that** said calculation parameters of the content summary comprise at least one of: a content identifier, a segmentation list, a calculation sequence, and algorithm choices, wherein,
said content identifier indicates the content registered by said content provider, said content comprising the name of the service content provided by said content provider and the content ID;
said segmentation list is a parameter list obtained by segmenting said content data, and comprises at least one of: a data unit length, options for multi-stage segmentation, options for constant-length segmentation, and a data segment length;
said calculation sequence specifies the calculation of one execution content summary of said data segment; and
said algorithm choices specify the type of the algorithm and parameters used to calculate said content summary.

4. The method according to Claim 1, **characterized in that** the premise for performing said step 2 is that the content provider has submitted the registration of said service content.

5. The method according to Claim 4, **characterized in that** when said content provider submits the registration of said service content,
said service management platform obtaining the initial content summary information of said service content.

6. The method according to Claim 1, **characterized in that** performing following processings in said step 3:
said content server of the content provider parsing one or more said calculation parameters of the content summary;
according to said calculation parameters of the content summary, said content server of the content provider performing said content summary calculation of said service content and obtaining said content summary information; and
said content server of the content provider returning said content summary information to said service management platform.

7. The method according to Claim 5, **characterized in that** performing the following processings in said step 4:
said service management platform specifying said calculation parameters of the content summary; and
making said calculation parameters of the content summary corresponding to said initial content summary information.

## Patentansprüche

1. Eine Schnittstellenmethode für die Überprüfung von summarischen Inhalten, zur Verwendung in mobilen Multimedia Broadcast Multicast-Systemen, um die Konsistenz von Contents, die von Inhalte-Anbietern mit registrierten Service-Contents auf der Service-Management-Plattform zur Verfügung gestellt werden, zu gewährleisten,
**dadurch gekennzeichnet, dass** das Verfahren die folgenden Schritte umfasst:
schritt 1, die Konfigurierung erfolgt durch die Service-Management-Plattform, die Berechnungsparameter der summarischen Übersicht, auf Anfrage eines Nutzers nach einem Leistungsinhalt;
schritt 2, die Anweisungen erfolgen durch die besagte Service-Management-Plattform, einen Content-Server des Content Providers, um die summarischen Inhalte gemäß der besagten Berechnungsparameter zur Verfügung zu stellen;
schritt 3, der besagte Content Server des Content Providers generiert die besagten summarischen Informationen gemäß der besagten Berechnungsparameter der summarischen Übersicht, und sendet die besagten summarischen Informationen zur besagten Service-Management-Plattform zurück; und
schritt 4, die besagte Service-Management-Plattform ruft die summarischen Informationen ab und legt fest, ob die Konsistenz der Service-Contents zu überprüfen ist;
wobei die Voraussetzung für die Durchführung des besagten Schrittes 2 die Überprüfung der Konsistenz des Service Contents durch die Service-Management-Plattform ist;
wobei im Falle, dass die besagte Service-Management-Plattform die Konsistenz der Service-Contents zu überprüfen hat, die besagte Service-Management-Plattform die ursprüngliche summarische Übersicht des besagten Service Content benötigt, um die besagte Service Content Überprüfung im besagten Schritt 4 durchzuführen;
wobei in Schritt 4, um die Bearbeitung der Konsistenz der besagten Serviceinhalte festzulegen, die Überprüfung der Konsistenz der besagten Serviceinhalte wie folgt abläuft: die besagte Service-Management-Plattform vergleicht den Inhalt der besagten summarischen Übersicht, die mit den besagten Berechnungsparametern erlangt werden, mit dem ursprünglichen Inhalt, um somit die Konsistenz des besagten Service Contents festzulegen.

2. Das Verfahren nach Anspruch 1, **dadurch gekennzeichnet, dass** die besagten Berechnungsparameter der summarischen Übersicht einheitlich konfiguriert sind oder dem Service Content entsprechen, der vom besagten Content Provider zur Verfügung gestellt wird.

3. Das Verfahren nach Anspruch 1, **dadurch gekennzeichnet, dass** die besagten Berechnungsparameter der summarischen Übersicht zumindest eines der folgenden Elemente beinhalten: einen Inhalts-Identifikator, ein Segmentierungs-Verzeichnis, einen Berechnungsablauf sowie die Auswahl des Algorithmus, wobei der besagte Inhalts-Identifikator den registrierten Content des besagten Content Providers angibt; der besagte Content beinhaltet die Bezeichnung des Service Content, der vom besagten Content Provider zur Verfügung gestellt wird sowie die Content-ID;
das besagte Segmentierungs-Verzeichnis ist eine Parameter-Liste, die durch die Segmentierung der besagten Content-Daten erlangt wird und beinhaltet zumindest eines der folgenden Elemente: die Dateneinheitslänge, Bereitstellungsoptionen für die mehrstufige Segmentierung, Optionen für konstante Längensegmentierung sowie eine Datensegmentlänge;
der besagte Berechnungsablauf definiert die Berechnung einer inhaltlichen Kurzfassung des besagten Datensegments; und
die besagte Algorithmus-Auswahl definiert die Art des Algorithmus und die verwendeten Parameter desbesagten summarischen Inhalts.

4. Das Verfahren nach Anspruch 1, **dadurch gekennzeichnet, dass** die Voraussetzung für die Durchführung des besagten Schrittes 2 die eingereichte Registrierung des besagten Service Content durch den Content Provider ist.

5. Das Verfahren nach Anspruch 4, **dadurch gekennzeichnet, dass**, wenn der besagte Content Provider die Registrierung des besagten Service Content einreicht,
die besagte Service-Management-Plattform den ursprünglichen summarischen Inhalt des besagten Service Content erhält.

6. Das Verfahren nach Anspruch 1, **dadurch gekennzeichnet, dass** das Verfahren folgendes im besagten Schritt 3 umfasst:
der besagte Content Server des Content Providers einen oder mehrere der besagten Berechnungsparameter der summarischen Übersicht zergliedert
gemäß der besagten Berechnungsparameter der summarischen Übersicht der besagte Content Server des Content Providers die Berechnung der summarischen Übersicht des besagten Service Content übernimmt und die besagten summarischen Informationsinhalte erhält; und
der besagte Content Server des Content Providers die besagten summarischen Informationen zur besagten Service-Management-Plattform zurücksendet.

7. Das Verfahren nach Anspruch 5, **dadurch gekennzeichnet, dass** das das Verfahren folgendes im besagten Schritt 4 umfasst:
die besagte Service-Management-Plattform die besagten Berechnungsparameter des summarischen Inhalts definiert; und
die besagten Berechnungsparameter der summarischen Übersicht gemäß der besagten ursprünglichen summarischen Informationsinhalte erstellt.

## Revendications

1. Procédé d'interface pour vérifier un résumé de contenu, utilisé dans un système multidiffusion de radiodiffusion multimédia mobile permettant de garantir la cohérence des contenus de service fournis par un fournisseur de contenus avec les contenus de service enregistrés par le fournisseur de contenus au niveau d'une plate-forme de gestion de service ; **caractérisé en ce que** le procédé comprend les étapes suivantes :
étape 1, la configuration, par la plate-forme de gestion de service, des paramètres de calcul du résumé de contenu, lorsqu'un utilisateur demande un contenu de service ;
étape 2, le fait de donner une instruction, par ladite plate-forme de gestion de service, à un serveur de contenu du fournisseur de contenus de fournir les informations de résumé de contenu selon lesdits paramètres de calcul du résumé de contenu ;
étape 3, la génération par ledit serveur de contenu du fournisseur de contenus desdites informations de résumé de contenu selon lesdits paramètres de calcul du résumé de contenu, et le renvoi desdites informations de résumé de contenu à ladite plate-forme de gestion de service ; et
étape 4, l'obtention par ladite plate-forme de gestion de service desdites informations de résumé de contenu, et le fait de déterminer s'il faut vérifier la cohérence du contenu de service ;
dans lequel la condition pour réaliser ladite étape 2 est que ladite plate-forme de gestion de service ait à réaliser ladite vérification de cohérence de contenu de service ;
dans lequel, lorsque ladite plate-forme de gestion de service a à réaliser ladite vérification de cohérence de contenu de service, l'acquisition par ladite plate-forme de gestion de service des informations de résumé de contenu initiales dudit contenu de service et le fait de déterminer s'il faut réaliser ladite vérification de cohérente de contenu de service à ladite étape 4 ;
dans lequel à l'étape 4, le fait de déterminer qu'il faut réaliser le processus de ladite vérification de cohérence de contenu de service, le processus de ladite vérification de cohérence de contenu de service est le suivant : la comparaison par ladite plate-forme de gestion de service desdites informations de résumé de contenu obtenues à partir desdits paramètres de calcul du résumé de contenu aux informations de résumé de contenu initiales, de façon à déterminer la cohérence dudit contenu de service.

2. Procédé selon la revendication 1, **caractérisé en ce que** lesdits paramètres de calcul du résumé de contenu sont unifiés, configurés, ou correspondent au contenu de service fourni par ledit fournisseur de contenus.

3. Procédé selon la revendication 1, **caractérisé en ce que** lesdits paramètres de calcul du résumé de contenu comprennent au moins l'un parmi : un identifiant de contenu, une liste de segmentation, une séquence de calcul et des choix d'algorithme, dans lequel,
ledit identifiant de contenu indique le contenu enregistré par ledit fournisseur de contenus, ledit contenu comprenant le nom du contenu de service fourni par ledit fournisseur de service et l'identifiant de contenu ;
ladite liste de segmentation est une liste de paramètres obtenue par segmentation desdites données de contenu, et comprend au moins l'une parmi : une longueur d'unité de données, des options pour une segmentation multiétage, des options pour une segmentation de longueur constante et une longueur de segment de données ;
ladite séquence de calcul spécifie le calcul d'un résumé de contenu d'exécution dudit segment de données ; et
lesdits choix d'algorithme spécifient le type de l'algorithme et les paramètres utilisés pour calculer ledit résumé de contenu.

4. Procédé selon la revendication 1, **caractérisé en ce que** la condition pour réaliser ladite étape 2 est que le fournisseur de contenus ait soumis l'enregistrement dudit contenu de service.

5. Procédé selon la revendication 4, **caractérisé en ce que** lorsque ledit fournisseur de contenus soumet l'enregistrement dudit contenu de service,
ladite plate-forme de gestion de service obtient les informations de résumé de contenu initiales dudit contenu de service.

6. Procédé selon la revendication 1, **caractérisé par** la réalisation des processus suivants à ladite étape 3 :
l'analyse syntaxique par ledit serveur de contenu du fournisseur de contenus d'un ou plusieurs desdits paramètres de calcul du résumé de contenu ;
selon lesdits paramètres de calcul du résumé de contenu, la réalisation par ledit serveur de contenu du fournisseur de contenus dudit calcul de résumé de contenu dudit contenu de service et l'obtention desdites informations de résumé de contenu ; et
le renvoi par ledit serveur de contenu du fournisseur de contenus desdites informations de résumé de contenu à ladite plate-forme de gestion de service.

7. Procédé selon la revendication 5, **caractérisé par** la réalisation des processus suivants à ladite étape 4 :
la spécification par ladite plate-forme de gestion de service desdits paramètres de calcul du résumé de contenu ; et
le fait de faire correspondre lesdits paramètres de résumé de contenu auxdites informations de résumé de contenu auxdites informations de résumé de contenu initiales.
